# EUROPEAN PATENT APPLICATION

(11) **EP 0 630 162 A2**
(43) Date of publication of application: **21.12.1994**
(21) Application number: 94304066.7
(22) Date of filing: 07.06.1994
(51) Int. Cl.: H04Q 3/66, H04Q 3/00

(54) **Routing multiple telephone calls using a common routing plan**

(30) Priority: 18.06.1993 US 80035
(71) Applicant: AT&T Corp., New York, NY 10013-2412 (US)
(72) Inventor: Feldman, Jeffrey, Westfield, New Jersey 07090 (US); Stieglitz, Richard W., Freehold, New Jersey 07728 (US); Wacker, Joanne, East Hanover, New Jersey 07936 (US)
(74) Representative: Buckley, Christopher Simon Thirsk

(57) **Abstract**

Multiple special service numbers, such as 800 numbers, that are owned by a customer are routed using a single, common routing plan. An 800 number database system (114) which provides routing information for 800 number calls is configured to compare a dialed 800 telephone number (e.g., by 102) received from a telephone switching system (106) with telephone numbers stored in the database memory (118). Corresponding to each of the stored telephone numbers and stored within the database memory is a pointer to a routing plan to be used in processing and routing calls placed to the respective telephone number (e.g., 112). Upon finding a match between the dialed 800 telephone number and a stored telephone number, the 800 number database provides an indication of the appropriate routing plan to be used to route the dialed 800 telephone number. The 800 database then determines from the selected routing plan how to route the call.

## Description

### Technical Field

The present invention relates to methods and apparatus for routing special service calls, such as calls which require translating a dialed telephone number into another number before the call can be routed.

### Background of the Invention

Many businesses use special service numbers, such as socalled "toll-free" or "800" numbers, to allow consumers to easily communicate with the business. So-called "advanced 800 number features" provide the owner of an 800 number (an "800 number customer") with various options for routing calls placed to the 800 number. These options are implemented in software through the use of an 800 number "routing plan" The routing plan enables call routing decisions to be based, for example, on the time of day, the caller's country code or area code, or other such information. Each 800 number is routed according to its own routing plan, which can be modified by an 800 number customer as desired to suit the 800 number customer's needs.

Larger 800 number customers often have more than one 800 number. For example, a telemarketer who provides marketing services for hundreds or thousands of different manufacturers may have a different 800 number for each manufacturer that the telemarketer represents. However, because calls to each 800 number are routed according to a routing plan associated only with that 800 number, changes applicable to many 800 numbers must be made individually to many routing plans. The effort required to implement a change increases rapidly as the number of routing plans increases.

### Summary of the Invention

Routing of multiple special service numbers, such as 800 numbers, that are owned by a customer is simplified, in accordance with the invention, by routing two or more of such numbers using a single routing plan. By using a single, common routing plan to route calls placed to several 800 numbers, a change in the common routing plan effects changes to the call routing of all of the 800 numbers. This eliminates the considerable labor and time that otherwise would be required to implement identical changes to several or all of an 800 number customer's routing plans. In the telemarketer example described above, use of a common routing plan for all of the telemarketer's 800 numbers would enable the telemarketer to change the routing of calls to more than a thousand 800 numbers by making a single change to the common routing plan. Also, new 800 numbers can be added easily without developing and maintaining additional routing plans.

In an exemplary embodiment of the invention, an 800 number database system which provides routing information for 800 number calls stores a list of telephone numbers, together with a pointer to a routing plan to be used to route each of the telephone numbers on the list. The database system is configured to compare a dialed 800 telephone number received from a telephone switching system with the stored telephone numbers. Upon finding a match between the dialed 800 number and a stored number, the database system returns an indication of the routing plan that will be used to route the dialed 800 number. The 800 database then determines from the indicated routing plan how to route the call and returns the required routing information to the telephone switching system.

### Brief Description of the Drawings

In the drawings:
FIG. 1 is a simplified schematic diagram of a long distance telephone system, including a database system for storing 800 number routing plans;
FIG. 2 is a schematic diagram of an exemplary routing plan for an 800 number;
FIG. 3 is a flow chart for mapping multiple 800 numbers to a single routing plan in accordance with the principles of the invention;
FIG. 4 is a table showing the contents of an illustrative lookup table constructed in accordance with the principles of the invention;
FIG. 5 is a block diagram of an exemplary implementation of the invention; and
FIG. 6 is a schematic diagram of a portion of an exemplary routing plan for implementing dialed number decisions in accordance with the invention.

### Detailed Description

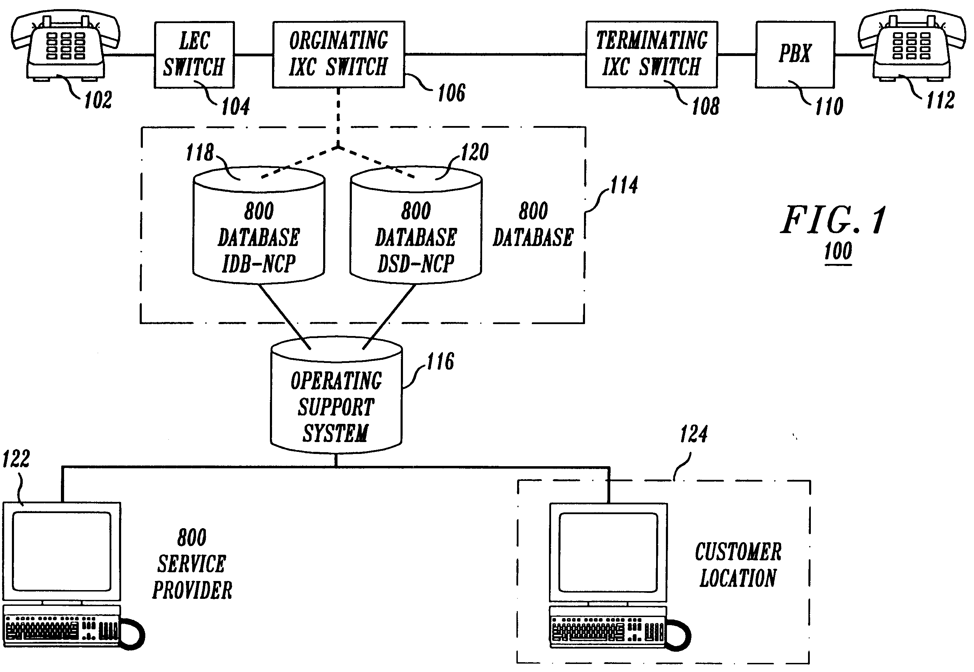

Referring now to the drawings, FIG. 1 shows a communications network 100 which includes a telephone station 102, a local exchange carrier (LEC) switch 104, an "originating" interexchange carrier (IXC) switch 106, a "terminating" IXC switch 108, a private branch exchange 110, and a telephone station 112. Also included within communications network 100 is an 800 number database 114 and an operating support system 116. Telephone calls placed by an 800 number caller from telephone station 102 are switched by LEC switch 104 to originating IXC switch 106. IXC switch 106 accesses 800 number database 114, as will be described in greater detail below, to determine how to route the call. On the basis of information derived from 800 number database 114, IXC switch 106 routes the call to terminating IXC switch 108. IXC switch 108 routes the call to PBX 110, which, in turn, extends the call to the 800 number customer at telephone station 112. IXC switches 106 and 108 illustratively are 4ESS™ switches manufactured by American Telephone & Telegraph Co., Inc. (AT&T), and LEC switch 104 illustratively is a 5ESS® switch manufactured by AT&T.

To route the call, originating IXC switch 106 accesses 800 number database 114 to first determine a plain ordinary telephone service (POTS) number. Techniques for translating a dialed 800 number into a POTS number are disclosed in U.S. Patent 4,191,860 issued March 4, 1980, to Weber, entitled "Data Base Communication Call Processing Method," which is hereby incorporated by reference. If the 800 number is identified as having associated with it advanced 800 number features (such as by a flag set within a database record associated with the 800 number), IXC switch 106 again accesses 800 number database 114 to determine how to route the call to implement the advanced features. Database 114 illustratively is shown as comprising two separate databases 118 and 120, as described below, but could alternatively be implemented as a single database.

Database 118 stores information required to convert an 800 number to a POTS number. Database 118 illustratively is an INWATS database (IDB) network control point (NCP) manufactured by AT&T. Database 120 stores advanced feature information for each 800 number, typically in the form of a conventional 800 number routing plan. Database 120 illustratively is a Direct Services Dialing (DSD) NCP manufactured by AT&T.

Although the invention is described in the context of 800 number service, it is to be understood that it is equally applicable to other special service calls which involve translation of a dialed number to a different number (or other similar processing) before routing a call. For example, so called "900 number" calls may be routed according to routing plans. (A 900 number call is a call dialed in the form 900-NXX-YYYY, where 900, NXX, and YYYY represent the area code, exchange, and line number, respectively. The caller typically pays at least a portion of the telephone charges and often an additional premium.) Multiple 900 numbers can be routed using a single routing plan. The invention is equally applicable to calls placed to multiple "700 numbers" (telephone numbers of the form 700-NXX-YYYY) and to calls that are routed according to the call-recipient's instructions.

Changes to 800 database 114 are effected through an operating support system 116. Operating support system 116 enables an 800 service provider, such as AT&T, to gain access to 800 database 114. Operating support system 116 also preferably is configured to provide 800 number customers access to database 114 through, for example, a workstation 124 located at the 800 number customer's headquarters. Operating support system 116 preferably is configured to provide the 800 service provider with access to both 800 database 118 and 800 database 120, while restricting access from customer location 124 to 800 database 120.

Before describing the implementation details and novel features of the present invention, it will be useful for illustration purposes to describe an exemplary 800 number routing plan. A typical routing plan may include many "decision nodes" which cause a call to be routed in a deterministic manner in response to different types of information, as described below. It will be apparent to those skilled in the art that routing plans are implemented in software within 800 database 114.

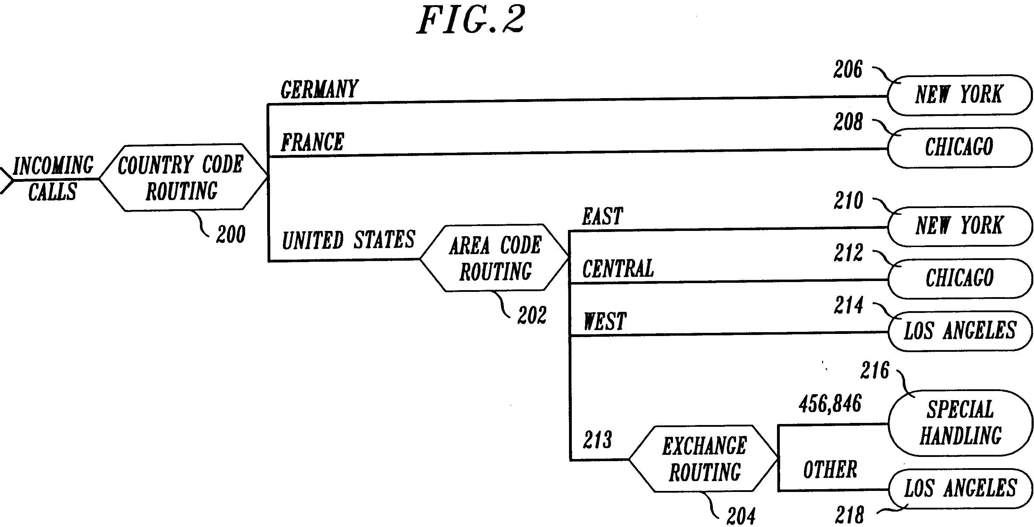

FIG. 2 shows one such 800 number routing plan. The routing plan includes several decision nodes, namely, nodes 200, 202 and 204. An incoming 800 telephone call to be routed according to the routing plan of FIG. 2 would be processed by an NCP within database system 114. In this example, the NCP uses information obtained from the caller's phone number to implement the routing plan. In particular, the caller's country code is first analyzed at a decision node 200 implemented in software. If the call originated in Germany or France, the call is routed to New York or Chicago, respectively, as indicated by reference numbers 206 and 208. If the call originated within the United States, however, further analysis is required to determine proper call routing.

Having determined that a call originated within the United States, the NCP analyzes the caller's area code (illustrated by decision node 202). If the caller's area code corresponds to an area code in a predefined "eastern" region of the United States, the call is routed to New York, as shown by reference number 210. Similarly, if the caller's area code corresponds to an area code in a predefined "central" or "western" region of the United States, the call is routed to Chicago or Los Angeles, respectively, as indicated by reference numbers 212 and 214. If, however, the caller's area code is 213, further processing is performed at a decision node 204 to route the call based on the caller's telephone exchange (i.e., the three digits of the phone number that follow the area code). In this example, calls from area code 213 having an exchange of either 456 or 846 are routed to provide special handling (reference number 216). Calls placed from all other exchanges within area code 213 are routed to the 800 number customer's Los Angeles office (reference number 218).

Although the 800 number routing plan shown in FIG. 2 is relatively simple, routing plans can be extremely complex. For example, a routing plan may include decision nodes which provide routing decisions based on time of day, day of the week, and/or responses by the caller to call prompters. Routing decisions also can be made based on the availability of the 800 number customer's workforce as determined by an automatic call allocator. When several of these advanced routing features are combined, complex routing plans can be created. A typical routing plan may include hundreds of decision nodes. One can understand that even a minor change that must be made to a large number of identical routing plans (which each correspond to a different 800 number of the 800 number customer) is a costly and time-consuming endeavor.

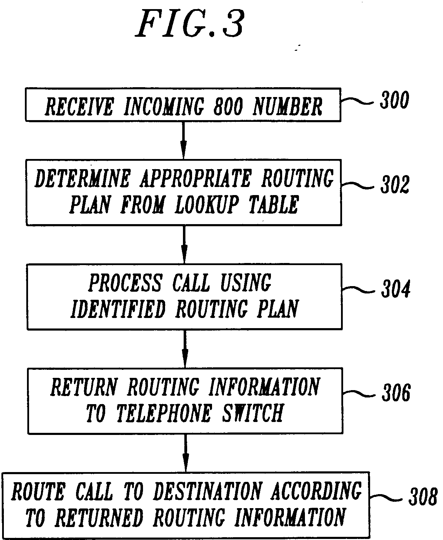

In accordance with the invention, calls placed to several different 800 numbers are routed according to a single, common 800 number routing plan. FIG. 3 shows an illustrative flow chart for mapping multiple 800 numbers to a single routing plan. An incoming 800 number, that is, an 800 number presented to an NCP (such as 800 database 114 of FIG. 1) for processing advanced 800 number features, is received at the NCP (step 300). The incoming 800 number is processed (step 302), such as by applying the number to a lockup table (or using the incoming 800 number to directly address a pointer to a routing plan), to determine which routing plan shall be used to route the call. Intermediate processing steps can be performed before or together with step 302 to implement other network features. The NCP, having identified the appropriate routing plan for use with calls placed to that 800 number, processes the call (step 304) according to the identified routing plan and returns to originating IXC switch 106 information for routing the call (step 306). Originating IXC switch 106 then routes the call to the destination determined by the NCP (step 308).

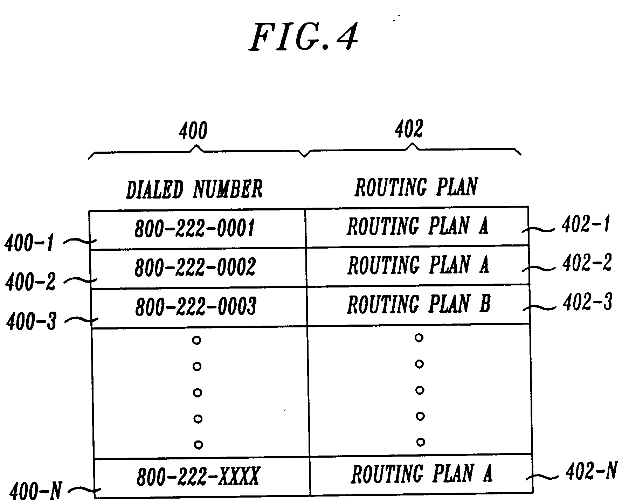

FIG. 4 shows an exemplary "lookup" table, which is stored within the memory circuits of database 114 of FIG. 1, to facilitate routing more than one 800 call using a single routing plan. The table is divided into two fields, which are identified as the "Dialed Number" field 400 and the "Routing Plan" field 402. The telephone numbers listed within Dialed Number field 400, designated 400-1 through 400-N, illustratively represent 800 numbers owned by an 800 number customer. Telephone numbers 400-1 through 400-N correspond to a respective one of pointers 402-1 through 402-N. Pointers 402-1 through 402-N identify a particular routing plan which will be used in routing calls within the communications network of FIG. 1 that are placed to the respective telephone number.

When an inquiry is presented to 800 number database 114 to determine how to route an 800 number call, database 114 receives the 800 number that was dialed by the caller. In one exemplary embodiment, database 114 compares the dialed number with each of the numbers in Dialed Number field 400 until a match with one of telephone numbers 400-1 through 400-N is found. When such a match is found, database 114 provides an indication that the routing plan identified in the Routing Plan field 402 corresponding to the matched telephone number is to be used in routing the call. For example, if a caller dials the number "800-222-0002," database 114 receives the dialed number and compares it to the numbers stored in Dialed Number field 400. Database 114 will find a match between the dialed number and the stored numbers at Dialed Number field 400-2. Database 114 then returns an indication that the call is to be routed using "Routing Plan A," as indicated in Routing Plan field 402-2. Database 114 (or some other processing means) then translates the dialed number into a routing number using Routing Plan A, and returns routing information to originating IXC switch 106 of FIG. 1. It is to be understood, of course, that other well-known processing techniques can be used to select a routing plan to be used to route a dialed number. For example, the dialed number can be used to directly address a pointer which indicates the routing plan to be used to route the call.

In an exemplary embodiment of the invention, database 114 is configured such that an 800 number customer can have several routing plans in effect at the same time, with multiple 800 numbers being routed according to each routing plan. To this end, database 114 is configured to store several routing plan for the 800 number customer. One or more of the stored routing plans will be in effect at any given time. One or more additional routing plans may be stored within the memory of database 114, even though such routing plans are not currently in use.

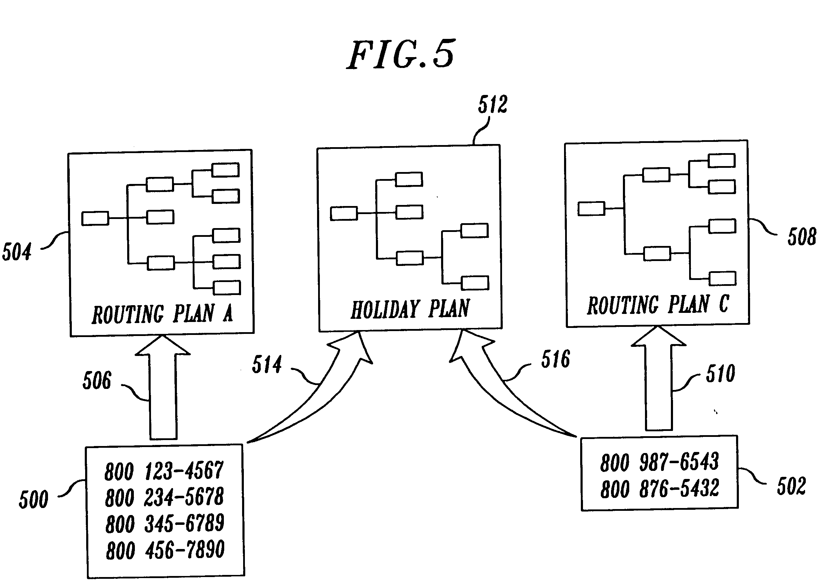

FIG. 5 is a diagram of the 800 numbers owned by an 800 customer. Several of the 800 numbers are routed using one routing plan while others are routed using a different routing plan. In this regard, it is convenient to think of the 800 numbers which are routed using the same routing plan as forming a "dialed number set." In FIG. 5, the 800 numbers are divided into two sets, namely, sets 500 and 502. Calls placed to telephone numbers belonging to set 500 are routed according to Routing Plan 504, as indicated by arrow 506. Calls placed to telephone numbers belonging to set 502 are routed according to Routing Plan 508, as indicated by arrow 510. Thus, an 800 customer can have more than one set of numbers in use at one time, with each set using a different routing plan. Numbers can be added to or deleted from either set without modifying the routing plans. Also, a change in a given routing plan will be effective for all telephone numbers within the set using that routing plan.

Two dialed number sets can use the same routing plan. For example, in FIG. 5, a Holiday Plan 512 represents a routing plan specifically designed to meet the 800 number customer's call processing need on holidays. Holiday plan 512 can be used by both set 500 and set 502, as shown by arrows 514 and 516. Holiday plan 512 may be stored within database 114, together with other auxiliary plans, and placed into effect as required. Holiday Plan 512 can be placed into effect, for example, by changing the contents of the lookup table Routing Plan fields 402-1 through 402-N (see FIG. 4) that are associated with each of the 800 customers 800 numbers.

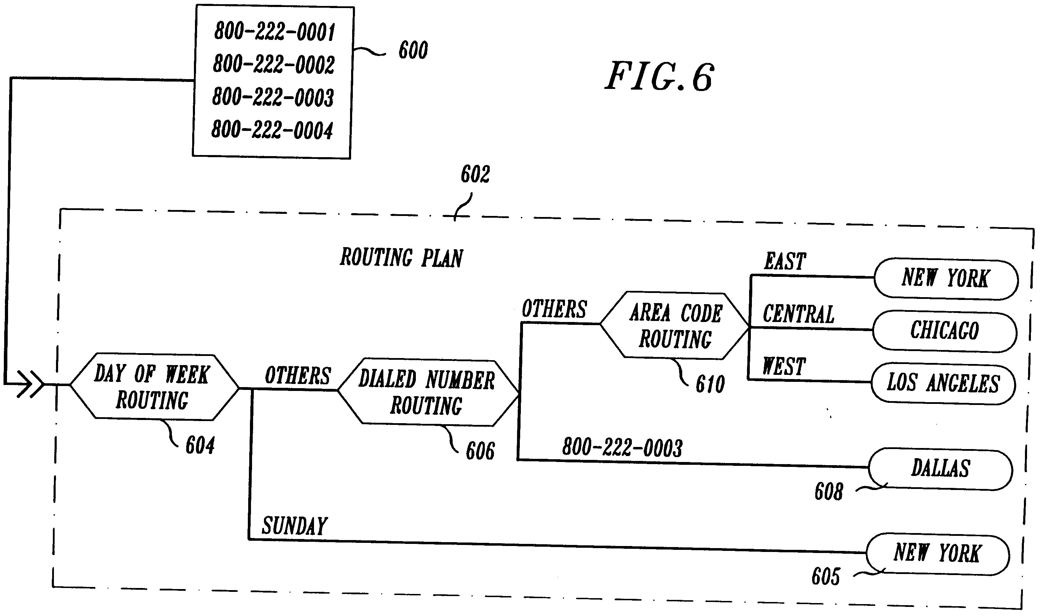

When multiple 800 numbers are routed using a common routing plan, it may be desirable at times to provide special routing treatment for selected ones of the 800 numbers. In accordance with another aspect of the invention, as shown in FIG. 6 and described below, a common routing plan can be designed to provide "dialed number" decisions to specially route calls placed to selected 800 numbers. This capability may be useful, for example, to a telemarketer who has a separate 800 number for each product offered for sale and wants to provide special or priority operator assistance for a particular premium product. This capability also may be useful where the telephone operator requires specific knowledge to process selected calls.

FIG. 6 shows a set of 800 numbers (indicated by reference number 600) which belong to an 800 number customer, and a portion of a common routing plan 602 (other portions of the routing plan are not shown) used to route the 800 customer's calls. Calls placed to numbers within the set are processed by database 114 (FIG. 1) according to the routing plan. At a decision node 604, the NCP determines that all calls placed to any number within set 600 are to be routed to the 800 number customer's New York office on Sunday, as indicated by reference number 605. During all other days of the week, further processing is required at a decision node 606. At decision node 606, the NCP determines whether the dialed 800 number matches a preselected telephone number which shall be routed for special processing. For example, if the dialed number is 800-222-0003, the call is routed to the 800 number customer's Dallas office, as indicated by reference number 608. Calls placed to any of the 800 number customer's other 800 numbers within set 600 require further processing before such calls can be routed. Specifically, these calls are processed at a third decision node 610, to be routed to one of the 800 number customer's other offices according to the caller's area code, as described above with respect to decision node 202 of FIG. 2.

It will be apparent to one skilled in the art that other modifications can be made to the described embodiments without departing from the scope of the invention. For example, although the invention has been described in the context of 800 number service provided by interexchange carriers, it is to be understood that the principles of the invention are equally applicable to service provided by local exchange carriers.

## Claims

1. A method for use in a system which routes special services calls according to a routing plan, the method comprising the steps of:
storing a routing plan; and
responding to each of at least two different special service calls made to respective different telephone numbers to select said routing plan as the routing plan for routing each of said calls.

2. The invention of claim 1 further comprising the step of processing the calls according to the selected routing plan.

3. The invention of claim 2 further comprising the step of routing the calls in a predetermined manner in response to a predetermined dialed telephone number.

4. The invention of claim 1 wherein the telephone numbers are 800 telephone numbers.

5. The invention of claim 1 wherein the telephone numbers are 900 telephone numbers.

6. A system which routes special services calls according to a routing plan, comprising:
means storing a routing plan; and
means for responding to each of at least two different special service calls made to respective different telephone numbers to select said routing plan as the routing plan for routing each of said calls.

7. The invention of claim 11 further comprising means for processing the calls according to the selected routing plan.

8. The invention of claim 12 further comprising means for routing the calls in a predetermined manner in response to a predetermined dialed telephone number.

9. The invention of claim 11 wherein the telephone numbers are 800 telephone numbers.

10. The invention of claim 11 wherein the telephone numbers are 900 telephone numbers.

11. The invention of claim 11 wherein the means for responding comprises:
means for receiving one of the at least two different telephone numbers;
means for comparing the received telephone number with a plurality of predetermined telephone numbers which represent telephone numbers to be routed according to the routing plan; and
means for selecting the routing plan for routing the call in response to a match of the received telephone number and one of the plurality of predetermined telephone numbers.
